# FASCICULE DE BREVET EUROPEEN

(11) **EP 3 149 282 B1**
(45) Date de publication et mention de la délivrance du brevet: **25.03.2026**
(21) Numéro de dépôt: 15732800.6
(22) Date de dépôt: 26.05.2015
(51) Int. Cl.: F01D 5/18, B22C 9/10

(54) **AUBE DE TURBINE À REFROIDISSEMENT OPTIMISÉ AU NIVEAU DE SON BORD DE FUITE COMPRENANT DES CONDUITS AMONT ET AVAL ET DES CAVITÉS LATERALES INTERNES**
TURBINENSCHAUFEL MIT OPTIMIERTER KÜHLUNG AN DER AUSTRITTSKANTE MIT STROMAUFWÄRTIGEN- UND STROMABWÄRTIGEN KANÄLEN UND INNENSEITENHOHLRÄUMEN
TURBINE BLADE HAVING UPSTREAM AND DOWNSTREAM PASSAGES AND INTERNAL LATERAL CAVITIES WITH OPTIMISED COOLING AT TRAILING EDGE

(30) Priorité: 28.05.2014 FR 1454869
(43) Date de publication de la demande: 05.04.2017
(73) Titulaire: SAFRAN AIRCRAFT ENGINES, 75015 Paris (FR)
(72) Inventeur: DUJOL, Charlotte, Marie, 77550 Moissy-Cramayel Cedex (FR); ENEAU, Patrice, 77550 Moissy-Cramayel Cedex (FR)
(74) Mandataire: Santarelli
(86) Numéro de dépôt international: PCT/FR2015/051382
(87) Numéro de publication internationale: WO 2015/181488

(56) Documents cités:
- EP-A1- 1 126 134
- EP-A1- 1 882 819
- EP-A1- 2 189 230
- EP-A2- 1 065 343
- EP-A2- 1 655 452
- EP-A2- 1 895 098
- EP-A2- 2 119 873
- WO-A1-2014/109819
- US-A- 4 252 501
- US-A- 5 820 774
- US-A1- 2008 080 979
- US-A1- 2012 269 647

## Description

### DOMAINE TECHNIQUE

L'invention concerne une aube de turbine de moteur d'aéronef de type turbomachine, tel que par exemple un turboréacteur à double flux ou un turbopropulseur à double flux, et des moyens de moulage pour la fabrication d'une telle aube.

### ETAT DE LA TECHNIQUE ANTERIEURE

Dans un tel moteur, l'air extérieur est admis dans une manche d'entrée pour traverser une soufflante comportant une série de pales rotatives avant de se scinder en un flux primaire central et un flux secondaire entourant le flux primaire.

Le flux primaire est ensuite compressé avant d'arriver dans une chambre de combustion, après quoi il se détend en traversant un ensemble de turbines avant d'être évacué vers l'arrière en générant de la poussée. Le flux secondaire est quant à lui propulsé directement vers l'arrière par la soufflante pour générer une poussée complémentaire.

La détente dans les turbines, qui permet d'entraîner le compresseur et la soufflante, a lieu à température élevée du fait qu'elle se produit immédiatement après la combustion. Cette turbine est ainsi conçue et dimensionnée pour fonctionner dans des conditions sévères de température, de pression et de débit de fluide.

Chaque turbine comporte une succession d'étages comportant chacun une série d'aubes orientées radialement et régulièrement espacées autour d'un arbre de rotation du moteur. Cet arbre central porte les éléments rotatifs de la turbine ainsi que les éléments rotatifs du compresseur et de la soufflante.

Concrètement, les aubes de la turbine qui sont soumises aux conditions les plus sévères sont celles des premiers étages de détente de cette turbine, à savoir les étages les plus proches de la zone de combustion et qui sont communément appelés étages haute pression.

D'une manière générale, les besoins accrus en performances et l'évolution des réglementations conduisent à concevoir des moteurs de plus faible taille fonctionnant dans des environnements de plus en plus sévères. Ceci implique d'accroître la tenue et la performance des aubes de turbine haute pression en particulier en ce qui concerne leur tenue en température.

Néanmoins, les améliorations existantes en ce qui concerne les matériaux et les revêtements de ces aubes ne suffisent pas pour leur permettre de supporter les températures élevées pouvant être atteintes par le flux en aval de la chambre de combustion. Cette situation conduit à reconsidérer le refroidissement de ces aubes pour l'améliorer afin qu'elles puissent supporter ces nouvelles conditions de fonctionnement.

Ce refroidissement est assuré en faisant circuler à l'intérieur de ces aubes de l'air frais qui est prélevé dans le turboréacteur en amont de la combustion, comme connu par exemple du document US 2008/0080979 A1. Cet air est admis en pied d'aube, pour cheminer le long d'un circuit interne de l'aube afin de la refroidir, et il est évacué hors de l'aube par des perçages traversant la paroi de cette aube et répartis sur cette paroi. Ces perçages servent à évacuer l'air de refroidissement, mais ils créent aussi à la surface externe de l'aube un film d'air plus froid que l'air issu de la combustion, ce qui contribue aussi à limiter la température de l'aube.

Pour accroître l'efficacité de refroidissement, les régions intérieures de l'aube dans lesquelles circule l'air de refroidissement comportent des artifices, c'est-à-dire des reliefs internes qui perturbent l'écoulement fluide de l'air de refroidissement pour accroître le transfert thermique depuis la paroi de l'aube vers cet air de refroidissement circulant dans les conduits internes de l'aube.

Ces architectures de refroidissement sont pénalisées par le fait que la longueur du circuit interne de l'aube donne lieu à un air trop fortement réchauffé lorsqu'il atteint la fin de ce circuit, de sorte que son efficacité de refroidissement est limitée dans les régions de fin de parcours, et en particulier au niveau du sommet d'aube où l'on cherche au contraire à obtenir une efficacité de refroidissement accrue.

Le but de l'invention est de proposer une structure d'aube permettant d'améliorer l'efficacité de refroidissement de cette aube.

### RESUME DE L'INVENTION

A cet effet, l'invention a pour objet une aube de turbine telle que définie dans la revendication 1.

Avec cet agencement, le refroidissement du bord de fuite est significativement amélioré par la formation d'un film de refroidissement à la face externe de la paroi d'intrados en amont de ce bord de fuite. Grâce à l'alimentation par le conduit aval qui est thermiquement isolé, ce film d'air a de plus une température basse.

L'invention concerne également une aube ainsi définie, dans laquelle chaque cavité latérale interne est pourvue de promoteurs de turbulences et/ou de déflecteurs pour y accroître les échanges thermiques, et dans laquelle le conduit amont et le conduit aval présentent des parois lisses pour limiter les pertes de charge.

L'invention concerne également des moyens de moulage configurés pour la fabrication d'une aube ainsi définie, comprenant des empreintes et un ensemble de noyaux destinés à la formation des conduits internes et rampes, et des cavités internes formant écran.

L'invention concerne également une turbine de turbomachine comprenant une aube telle que définie ci-dessus.

L'invention concerne également une turbomachine comprenant une turbine telle que définie ci-dessus.

### BREVE DESCRIPTION DES DESSINS

La figure 1 est une vue schématique d'un turboréacteur à double flux en coupe longitudinale ;
La figure 2 est une vue en perspective d'une aube de turbine de turboréacteur montré sur la figure 1 ;
La figure 3 est une vue en perspective représentant les parties internes creuses d'une aube de turbine selon un premier mode de réalisation non couvert par les revendications ;
La figure 4 est une vue en perspective représentant les parties internes creuses d'une aube de turbine selon un deuxième mode de réalisation non couvert par les revendications ;
La figure 5 est une vue en perspective représentant les parties internes creuses d'une aube de turbine selon un troisième mode de réalisation non couvert par les revendications ;
La figure 6 est une vue en perspective représentant les parties internes creuses d'une aube de turbine selon un quatrième mode de réalisation qui représente l'invention.

### EXPOSE DETAILLE DE MODES DE REALISATION PARTICULIERS

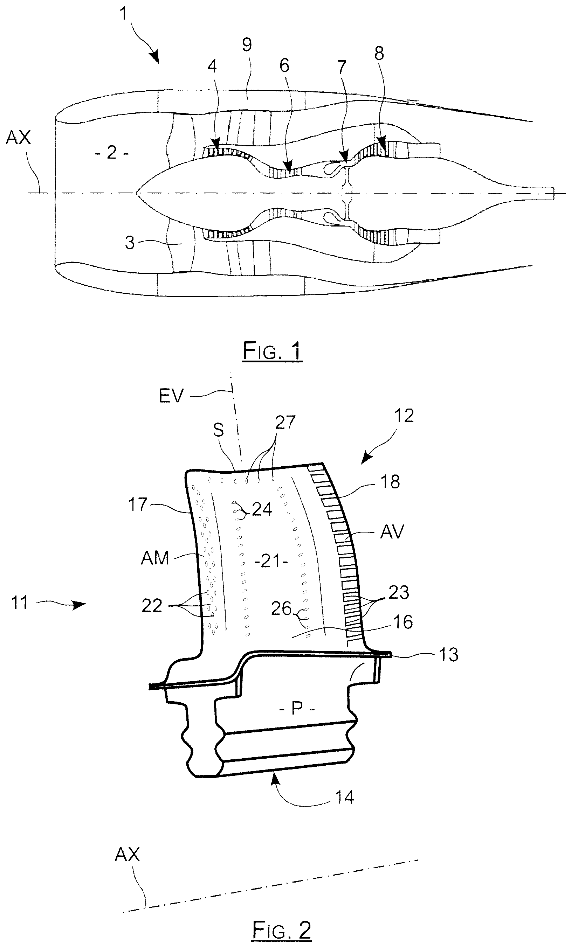

Comme visible sur la figure 1, une partie avant d'un turboréacteur à double flux 1 comporte une manche d'entrée 2 dans laquelle est admis l'air avant d'être aspiré par les pales d'une soufflante 3. Après avoir passé la région de la soufflante, l'air se divise en un flux primaire central et un flux secondaire qui entoure le flux primaire.

Le flux d'air primaire traverse ensuite un premier compresseur 4 situé immédiatement après la soufflante 3 alors que le flux secondaire est propulsé vers l'arrière pour directement générer une poussée additionnelle en étant soufflé autour du flux primaire.

Le flux primaire traverse ensuite un second étage de compression 6, avant d'atteindre une chambre 7 où a lieu sa combustion, après injection et vaporisation d'un carburant. Après combustion, ce flux primaire se détend dans une turbine haute pression 8 puis dans une turbine basse pression non représentée pour entrainer en rotation les étages de compression et la soufflante, avant d'être expulsé vers l'arrière du moteur pour générer une poussée.

Le moteur 1 et ses composants ont une forme de révolution autour d'un axe longitudinal AX. Il comporte notamment un carter externe 9 ayant lui aussi une forme de révolution et s'étendant depuis l'avant du moteur où il délimite la manche d'entrée d'air, jusqu'à la partie arrière où il délimite le conduit par lequel les flux primaire et secondaire sont évacués, l'avant et l'arrière à considérer par rapport à la direction d'avancement de l'aéronef équipé de ce turboréacteur. Ce carter 9 supporte les composants rotatifs situés au centre du moteur et qui comprennent un arbre rotatif portant les pales de la soufflante ainsi que les étages de compression et la turbine avec leurs aubes.

Une telle aube, qui est repérée par 11 sur la figure 2, comprend un pied P par lequel elle est fixée à un corps rotatif non représenté, appelé disque de turbine, et une pale 12 portée par ce pied P et constituant la partie aérodynamique de cette aube. Comme visible sur la figure 2, l'aube 11 comporte entre le pied P et la pale 12 une région intermédiaire 13 appelée plateforme.

L'ensemble que forme le pied P et la pale 12 est une pièce unique monobloc creuse issue de fonderie et comportant des conduits internes par lesquels circule de l'air de refroidissement. Ces conduits internes non visibles dans la figure 2 comportent des bouches d'admission s'ouvrant en face inférieure 14 du pied P et par lesquelles ces conduits sont alimentés en air frais. La paroi creuse de la pale 12 comporte des trous traversants et des fentes par lesquels est évacué l'air de refroidissement.

La pale 12 a une forme gauche vrillée ayant un contour sensiblement rectangulaire, se rapprochant d'un parallélépipède. Elle comprend une base 16 par laquelle elle est raccordée au pied P et qui s'étend à peu près parallèlement à l'axe de rotation AX. Elle comprend aussi un bord d'attaque 17 orienté radialement par rapport à l'axe AX et situé au niveau de l'amont AM de l'aube, c'est-à-dire la région avant de cette aube, par rapport à la direction d'avancement du moteur qu'elle équipe en service. Cette aube comporte aussi, un bord de fuite 18 orienté à peu près parallèlement au bord d'attaque 17 en étant espacé de celui-ci le long de l'axe AX pour être situé au niveau de la région aval AV ou arrière de l'aube. Elle comprend encore un sommet S à peu près parallèle à la base 16 et espacé de celle-ci selon une direction radiale par rapport à l'axe AX.

Les deux parois principales de cette aube sont sa paroi d'intrados 21, qui est la paroi visible dans la figure 2, et sa paroi d'extrados qui est la paroi opposée espacée de la paroi d'intrados, et qui n'est pas visible dans la figure 2 du fait qu'elle est masquée par la paroi d'intrados 21. Les parois d'intrados et d'extrados sont réunies au niveau du bord d'attaque 17, au niveau du bord de fuite 18 et également dans la région du sommet S de cette aube. Ces parois sont espacées l'une de l'autre au niveau de la base 16 pour permettre l'admission d'air de refroidissement dans la région interne de la pale.

Le bord d'attaque 17 a une forme bombée et il est pourvu d'une série de trous de refroidissements 22 traversant la paroi de l'aube dans cette région. Le bord de fuite 18 a quant à lui une forme effilée, et il comporte une série de fentes de refroidissement 23. Ces fentes 23 sont des fentes de faibles longueurs espacées les unes des autres en étant situées dans le prolongement les unes des autres, pour constituer un ensemble qui longe l'extrémité du bord de fuite 18.

Chaque fente 23 traverse la paroi de l'aube pour prélever de l'air de refroidissement à l'intérieur de cette aube et le souffler sur la paroi d'intrados au niveau du bord de fuite. Complémentairement, le bord de fuite est pourvu de nervures externes orientées parallèlement à l'axe AX pour canaliser cet air de refroidissement.

En fonctionnement, le fluide dans lequel est située cette aube 11 se déplace par rapport à celle-ci depuis le bord d'attaque 17 vers le bord de fuite 18 en longeant l'intrados 21 et l'extrados. La paroi d'intrados qui est soumise à un échauffement significatif en fonctionnement, comporte une séries de trous 24 sensiblement parallèlement au bord d'attaque 17 en étant situés en aval de ce bord d'attaque, et une autre série de trous 26 sensiblement parallèlement au bord de fuite 18 en étant situés en amont de ce bord de fuite 18 et des fentes 23 qu'il comporte . Les séries de trous 24 et 26 s'étendent ainsi l'une et l'autre selon la direction d'envergure EV de la pale, qui est la direction radiale par rapport à l'axe AX.

La région du sommet S de l'aube 11 présente, contrairement au bord d'attaque 17 et au bord de fuite 18, une certaine épaisseur, et cette région du sommet a par ailleurs une forme délimitant une portion creuse dite en baignoire.

Plus concrètement, ce sommet S présente une paroi de fermeture qui raccorde les parois d'intrados et d'extrados, cette paroi de fermeture ayant une orientation qui est globalement perpendiculaire aux parois d'intrados et d'extrados et parallèle à l'axe AX, ce qui correspond à une orientation perpendiculaire à la direction d'envergure EV. Cette paroi de fermeture qui n'est pas visible sur la figure 2 est située en retrait vers l'axe AX par rapport au bord libre de la paroi d'intrados et au bord libre de la paroi d'extrados, de sorte qu'elle constitue, conjointement avec ces bords une portion creuse ouverte en direction opposée à l'axe AX.

Une série de trous supplémentaires 27 traversant la paroi d'intrados est prévue le long du sommet S pour assurer un refroidissement significatif de ce sommet de pale qui subit des contraintes importantes du fait qu'il constitue la partie ayant la vitesse la plus élevée par rapport au fluide.

La série de trous 27 s'étend parallèlement à la paroi de fermeture, et la pale comporte, complémentairement, des trous non visibles sur la figure 2 qui traversent la paroi de fermeture pour déboucher dans la portion creuse appelée baignoire qui est au sommet de la pale.

Comme indiqué plus haut, une telle aube est une pièce monobloc creuse. Elle est fabriquée par moulage d'un matériau métallique de type titane ou autre, en utilisant un ensemble de noyaux pour délimiter les conduits internes de sa portion creuse ainsi que des portions de tiges pour former ses trous traversants. Les noyaux, tiges et autres sont retirés une fois que l'opération de moulage est terminée, typiquement avec un processus d'attaque chimique à même de dissoudre ces éléments sans altérer le matériau moulé.

Les figures qui suivent montrent des régions internes de l'aube selon l'invention qui y sont représentées par les formes des noyaux permettant de fabriquer cette aube. Autrement dit, les formes qui sont en relief sur les figures qui suivent constituent des représentations des formes creuses de l'aube selon l'invention.

L'idée à la base de l'invention est d'améliorer le refroidissement de l'aube du côté intrados dans la région du bord de fuite et de son sommet, cette région étant la première à se détériorer au cours de la vie d'une aube.

Ceci est assuré grâce à un conduit aval qui s'étend à l'intérieur de l'aube en étant protégé thermiquement de la paroi d'intrados, et à des trous traversant la paroi d'intrados vers ce conduit, en amont du bord de fuite, pour former un film d'air de refroidissement du bord de fuite du côté de la face externe de l'intrados.

Ce conduit aval s'étend selon la direction d'envergure depuis le pied jusqu'au sommet de l'aube pour être alimenté en air directement au niveau du pied et pour que cet air chemine dans l'aube sans être réchauffé durant son parcours avant d'être refoulé par les trous de refroidissement.

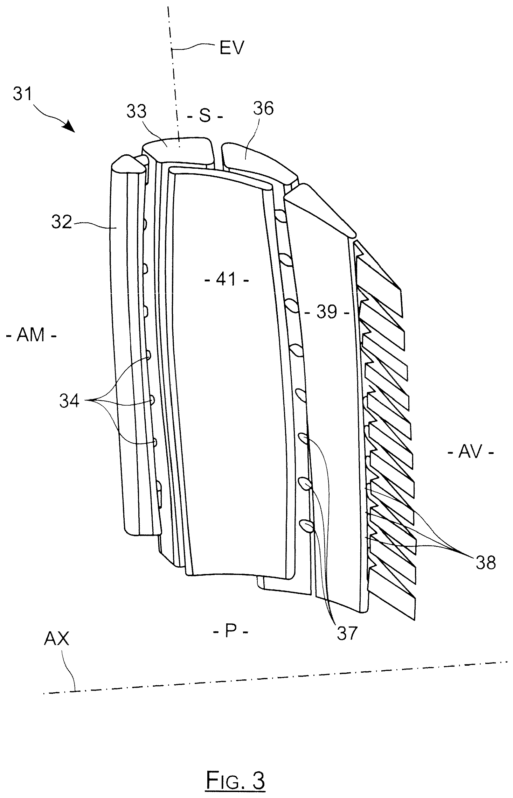

L'aube selon un premier mode de réalisation qui est repérée par 31 dans la figure 3 comporte une rampe amont 32 s'étendant depuis la base de sa pale jusqu'à son sommet S. Cette rampe amont 32 refroidit le bord d'attaque par des trous traversants formés dans la portion de paroi correspondant au bord d'attaque.

Cette rampe amont 32 est alimentée de manière calibrée par un conduit amont 33 qui longe cette rampe 32, en étant situé en aval de celle-ci, et qui collecte de l'air de refroidissement au niveau du pied. L'alimentation calibrée est assurée par des passages calibrés 34 régulièrement espacés le long de la direction d'envergure EV de l'aube et qui relient chacun le conduit amont 33 à la rampe amont 32.

Chaque passage 34 est calibré pour obtenir approximativement un débit d'air souhaité dans les trous de refroidissement situés dans la région de la rampe alimenté par le passage en question. Le débit d'air souhaité pour un trou ou une région donnée est conditionné par les contraintes thermiques du bord d'attaque dans la région refroidie par ce trou.

Un autre conduit, dit conduit aval et qui est repéré par 36, longe le conduit amont en s'étendant lui aussi de manière sensiblement rectiligne depuis le pied P de l'aube jusqu'à son sommet S. La paroi d'intrados de l'aube comporte une série de trous traversants 37 distribués de manière rectiligne selon la direction d'envergure en étant situés au niveau de la région aval du conduit aval 36. Chaque trou traversant 37 met ainsi en communication le conduit aval 36 avec la face externe de la paroi d'intrados en amont du bord de fuite pour former un film de refroidissement à la face externe de cette paroi.

La paroi d'intrados comporte dans la région du bord de fuite une série de fentes de refroidissement 38, régulièrement espacées et s'étendant dans le prolongement les unes des autres selon la direction d'envergure, pour délivrer au bord de fuite de l'air de refroidissement.

Ces fentes sont alimentées par une rampe aval 39 de l'aube, qui s'étend depuis le pied de l'aube, jusqu'à la région du sommet S en étant située entre le conduit aval 36 et le bord de fuite de l'aube. Cette rampe aval 39 collecte de l'air par son extrémité basse située dans le pied de l'aube, et elle refoule cet air au niveau des fentes de refroidissement 38 qu'elle alimente.

Complémentairement, l'aube selon l'invention comporte une cavité latérale interne 41 de faible épaisseur qui longe la paroi d'intrados du côté intérieure de l'aube pour former un écran thermique protégeant le conduit amont 33 et le conduit aval 36 de la chaleur à laquelle la paroi d'intrados est soumise.

Comme visible sur la figure 3, cette cavité interne 41 présente une faible épaisseur et un contour de forme rectangulaire. Elle s'étend en hauteur, c'est-à-dire le long de la direction d'envergure, depuis le pied de l'aube jusqu'à son sommet, et elle présente latéralement une étendue suffisante pour former un écran couvrant les conduits amont et aval.

Cette cavité latérale dans laquelle peut être établie une circulation d'air permet d'isoler thermiquement le conduit amont et le conduit aval de la paroi d'intrados pour réduire l'échauffement de l'air qu'ils véhiculent.

Dans ces conditions, le refroidissement du bord de fuite de l'aube, du côté intrados est significativement amélioré par la présence d'un film externe d'air de refroidissement qui a lui-même une efficacité de refroidissement importante du fait qu'il est alimenté en air par un conduit aval protégé thermiquement et ayant donc une température basse.

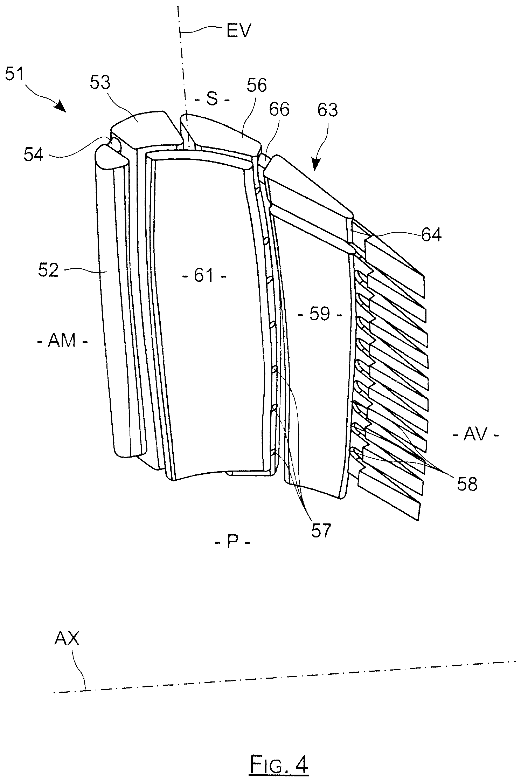

Selon un second mode de réalisation correspondant à l'aube 51 de la figure 4, le conduit aval qui est thermiquement protégé pour refroidir l'intrados en amont du bord de fuite fournit aussi de l'air frais à la fente de refroidissement du bord de fuite qui est la plus proche du sommet, de manière à améliorer le refroidissement de cette région.

Dans ce second mode de réalisation, l'aube 51 comporte aussi une rampe amont 52 alimentée de manière calibrée par un conduit amont 53 par des passages calibrés 54. Elle comporte aussi un conduit aval 56 et sa paroi d'intrados est pourvue d'une série de trous traversants 57 distribués selon la direction d'envergure EV au niveau de la région aval du conduit 56 pour mettre en communication ce conduit avec la face externe de la paroi d'intrados en amont du bord de fuite. L'air circulant dans le conduit aval 56 est évacué par ces trous 57, pour former là aussi un film de refroidissement en amont du bord de fuite.

La paroi d'intrados de cette aube 51 comporte aussi des fentes de refroidissement 58 du bord de fuite alimentées par une rampe aval 59, qui s'étend aussi depuis le pied P jusqu'à une région située en deçà du sommet S. Elle comporte aussi une cavité latérale interne 61 de faible épaisseur qui longe la paroi d'intrados pour former un écran thermique protégeant le conduit amont 53 et le conduit aval 56.

Tous ces éléments 52 à 61 sont identiques aux éléments 32 à 41 de l'aube 31 à la différence près que la rampe aval 59 a une plus faible longueur que la rampe aval 39, et que le conduit aval 56 alimente une cavité supérieure 63 qui est située au niveau du sommet S de l'aube.

La cavité supérieure 63 est située dans le prolongement de l'extrémité de la rampe aval 59 en étant alimentée en air par le conduit aval de manière à alimenter la fente 64 du bord de fuite qui est plus proche du sommet que les fentes 58, avec de l'air plus frais pour améliorer encore le refroidissement de l'aube au niveau du sommet de son bord de fuite.

Cette cavité supérieure 63, s'étend le long d'une paroi de fermeture de l'aube qui réunit l'intrados et l'extrados en étant orientée selon une direction perpendiculaire à la direction d'envergure EV. Cette cavité supérieure 63 est située en aval du conduit aval 56 en étant délimitée par la paroi de fermeture, la paroi d'intrados et la paroi d'extrados pour s'étendre jusqu'au bord de fuite. Elle est reliée à l'extrémité haute du conduit aval 56 par un canal interne de liaison 66.

Grâce à cette cavité supérieure 63, le sommet du bord de fuite de l'aube, bénéficie d'un refroidissement efficace résultant de la fourniture dans cette zone d'un air frais à un débit ajusté au besoin.

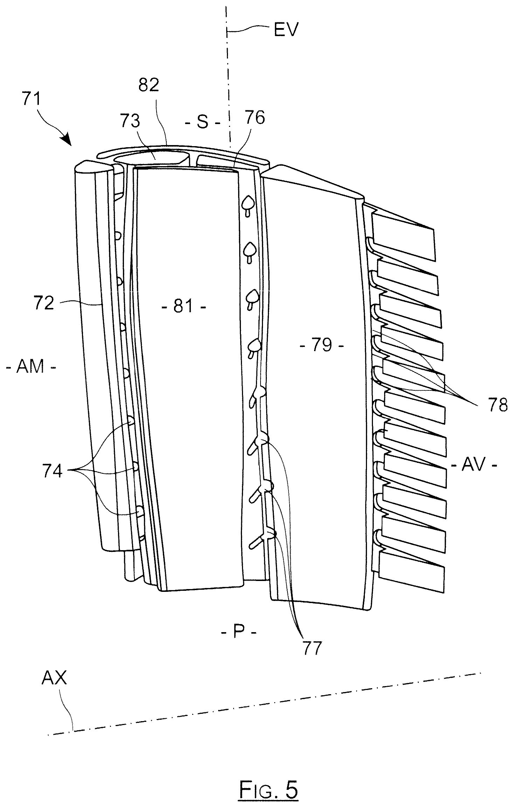

Selon un troisième mode de réalisation qui est représenté sur la figure 5, le conduit amont et le conduit aval qui sont isolés thermiquement par la cavité interne longeant la paroi d'intrados, sont aussi isolés thermiquement par une autre cavité interne de l'aube qui longe la paroi d'extrados.

Dans ce troisième mode de réalisation qui apparaît à la figure 5, l'aube 71 comporte aussi une rampe amont 72 alimentée de manière calibrée par un conduit amont 73 au moyen de passages calibrés 74 reliant chacun le conduit amont à la rampe amont.

Elle comporte aussi un conduit aval 76 et des trous traversants 77 sa paroi d'intrados en étant distribués selon la direction d'envergure EV au niveau de la région aval du conduit 76 pour mettre en communication ce conduit avec la face externe de la paroi d'intrados en amont du bord de fuite. L'air circulant dans le conduit aval 76 est donc là aussi évacué par ces trous 77, pour former un film de refroidissement en amont du bord de fuite qui améliore significativement le refroidissement de ce bord de fuite.

La paroi d'intrados comporte aussi des fentes de refroidissement 78 du bord de fuite alimentées en air par une rampe aval 79, cette rampe aval s'étendant également depuis le pied P jusqu'à la région du sommet S de l'aube. L'aube comporte aussi une cavité latérale interne 81 de faible épaisseur qui longe la paroi d'intrados pour former un écran thermique protégeant le conduit amont 73 et le conduit aval 76 de la chaleur de la paroi d'intrados.

Tous ces éléments 72 à 81 sont identiques aux éléments 32 à 41 de l'aube 31 et aux éléments 52 à 61 de l'aube 51, à la différence près que le conduit amont 73 et le conduit aval 76 présentent une plus faible épaisseur, et qu'en plus de la première cavité latérale 81 longeant l'intrados, cette aube 71 comporte de plus une seconde cavité latérale interne 82 qui longe l'extrados. La présence de deux cavités latérales internes 81 et 82, qui longent respectivement l'intrados et l'extrados, apporte une isolation thermique accrue du conduit amont 73 et du conduit aval 76.

La deuxième cavité latérale interne 82 a aussi une faible épaisseur, et elle s'étend également depuis le pied P jusqu'à la région du sommet S, en présentant un contour généralement rectangulaire, ayant une largeur suffisante pour masquer ou couvrir le conduit amont ainsi que le conduit aval.

Grâce à ces deux cavités latérales internes, l'air qui chemine dans le conduit amont et dans le conduit aval est très faiblement réchauffé durant son trajet, ce qui contribue à accroître encore l'efficacité du refroidissement apporté en amont du bord de fuite du côté intrados, et du refroidissement apporté au bord d'attaque.

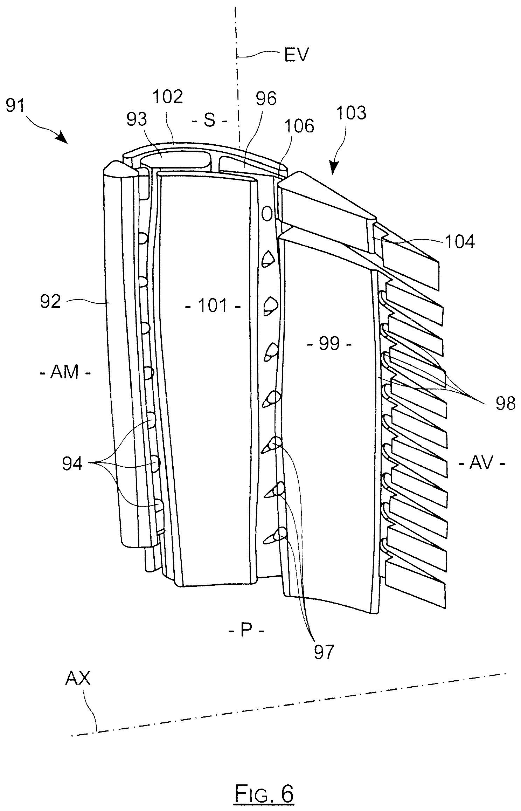

Selon un quatrième mode de réalisation représentant l'invention qui est représenté à la figure 6, le conduit aval qui est thermiquement protégé pour refroidir l'intrados en amont du bord de fuite fournit aussi de l'air frais à la fente de refroidissement du bord de fuite qui est la plus proche du sommet pour améliorer le refroidissement de cette région.

Dans ce quatrième mode de réalisation qui apparaît à la figure 6, l'aube 91 comporte aussi une rampe amont 92 alimentée de manière calibrée par un conduit amont 93 par des passages calibrés 94.

Elle comporte aussi un conduit aval 96 et sa paroi d'intrados est pourvue de trous traversants 97 distribués selon la direction d'envergure EV au niveau de la région aval du conduit 96 pour mettre en communication ce conduit avec la face externe de la paroi d'intrados en amont du bord de fuite. L'air circulant dans le conduit aval 96 est évacué par ces trous 97, là aussi pour former un film de refroidissement en amont du bord de fuite de manière à améliorer significativement le refroidissement de ce bord de fuite.

La paroi d'intrados comporte aussi des fentes de refroidissement 98 du bord de fuite alimentées par une rampe aval 99, qui s'étend également depuis le pied P jusqu'à la région du sommet S. Cette aube comporte aussi une cavité latérale interne 101 de faible épaisseur qui longe la paroi d'intrados et une autre cavité latérale interne 102 de faible épaisseur qui longe la paroi d'extrados, pour former deux écrans thermiques protégeant le conduit amont 93 et le conduit aval 96.

Tous ces éléments 92 à 102 sont identiques aux éléments 72 à 82 de l'aube 71, à la différence près que la rampe aval 99 a une plus faible longueur que la rampe aval 79, et que le conduit aval 96 alimente une cavité supérieure 103 qui est située au niveau du sommet S de l'aube.

La cavité supérieure 103 est située dans le prolongement de l'extrémité de la rampe aval 99 en étant alimentée en air par le conduit aval 96 de manière à alimenter la fente 104 du bord de fuite qui est la plus proche du sommet avec de l'air plus frais de manière à accroître le refroidissement de l'aube au niveau du sommet de son bord de fuite.

Cette cavité supérieure 103, s'étend le long d'une paroi de fermeture de l'aube qui réunit l'intrados et l'extrados en étant orientée selon une direction perpendiculaire à la direction d'envergure EV. Cette cavité supérieure 103 est située en aval du conduit aval 96 en étant délimitée par la paroi de fermeture, la paroi d'intrados et la paroi d'extrados pour s'étendre jusqu'au bord de fuite. Elle est reliée à l'extrémité haute du conduit aval 96 par un canal interne de liaison 106.

Grâce à cette cavité supérieure 103, le sommet du bord de fuite de l'aube, bénéficie d'un refroidissement efficace résultant de la fourniture dans cette zone d'un air frais à un débit ajusté au besoin.

D'une manière générale, la cavité supérieure du deuxième et du quatrième mode de réalisation de l'invention permet d'alimenter la région arrière ou aval du sommet de l'aube avec de l'air de refroidissement frais pour améliorer son refroidissement. Cette cavité permet ainsi d'alimenter la fente du bord de fuite qui est la plus proche du sommet, et éventuellement les fentes adjacentes.

Complémentairement, des trous traversant la paroi d'intrados à hauteur de la cavité supérieure pour déboucher dans cette cavité supérieure peuvent être prévus afin d'améliorer le refroidissement de la face externe de la paroi d'intrados dans la région du sommet de l'aube. La cavité supérieure fournit alors de l'air frais qui traverse la paroi d'intrados pour refroidir sa face externe en plus de fournir de l'air à la fente la plus proche du sommet, et en plus de refroidir par conduction thermique des parois de l'aube qui délimitent cette cavité supérieure.

Par ailleurs, des trous traversant les parois de l'aube et débouchant dans les cavités latérales internes formant écran thermique peuvent être prévus pour établir une circulation d'air optimale dans ces cavités. Chacun de ces trous est avantageusement situé au niveau d'une zone de dépression pour favoriser la circulation d'air. Chacun de ces trous assure que l'air collecté en pied d'aube et qui est acheminé dans une cavité formant écran thermique, est aspiré hors de l'aube, après avoir cheminé dans cette cavité.

Dans les différents modes de réalisation, le refroidissement de l'aube est encore optimisé en minimisant les pertes de charges dans chaque conduit interne pour y réduire les échanges thermiques, et en prévoyant au contraire des promoteurs de turbulences dans chaque cavité latérale pour y accroître les échanges thermiques.

Les cavités latérales ont ainsi une efficacité accrue en tant qu'écran thermique du fait qu'elles absorbent la chaleur issue des parois externes qu'elles longent, et l'air circulant dans les conduits internes est soumis à peu de pertes de charges afin de circuler rapidement pour se réchauffer le moins possible.

Les conduits internes tels que le conduit amont et le conduit aval ont ainsi des parois internes lisses pour favoriser une circulation rapide de l'air de refroidissement en minimisant les échanges thermiques entre cet air et les parois du conduit dans lequel il chemine. Chaque cavité latérale est avantageusement pourvue de déflecteurs qui favorisent une circulation de l'air dans toutes les régions de la cavité. De plus, les faces internes de la cavité sont pourvues de perturbateurs et/ou de pontets pour créer des turbulences dans la circulation de l'air afin de favoriser un haut niveau d'échange thermique entre l'air est les parois qu'il longe.

## Revendications

1. Aube (91) de turbine de turbomachine telle qu'un turbopropulseur ou un turboréacteur, cette aube (91) comprenant un pied (P), une pale portée par ce pied (P), cette pale comprenant un bord d'attaque et un bord de fuite situé en aval du bord d'attaque, cette pale comprenant une paroi d'intrados et une paroi d'extrados espacées latéralement l'une de l'autre et reliant chacune le bord d'attaque au bord de fuite, cette pale comprenant :
- au moins un conduit amont (93) collectant de l'air de refroidissement au niveau du pied (P) pour refroidir le bord d'attaque en évacuant cet air par des trous traversant la paroi de la pale au niveau de son bord d'attaque ;
- au moins un conduit aval (96) distinct du conduit amont (93) et adjacent au conduit amont (93) collectant de l'air de refroidissement au niveau du pied (P) pour refroidir le bord de fuite en évacuant cet air à travers des trous (97) traversant la paroi d'intrados en amont du bord de fuite ;
- une cavité latérale interne (102) longeant la paroi d'extrados pour former un écran thermique ayant latéralement une étendue suffisante pour isoler conjointement le conduit amont (93) et le conduit aval (96) de la paroi d'extrados.
- des fentes de refroidissement (98) régulièrement espacées et s'étendant dans le prolongement les unes des autres et traversant sa paroi d'intrados le long de son bord de fuite et une rampe aval (99) d'alimentation en air de refroidissement de ces fentes de refroidissement (98) ;
- une cavité supérieure (103) située au niveau du sommet (S) de l'aube pour alimenter en air la fente (104) du bord de fuite qui est la plus proche de ce sommet
(S)
- une rampe amont (92) d'alimentation de trous de refroidissement (22) du bord d'attaque, et ce conduit amont (93) étant configuré pour l'alimentation calibrée de cette rampe amont (92) ;
**caractérisée en ce que** :
- elle comprend une autre cavité latérale interne longeant la paroi d'intrados pour former un écran thermique s'étendant du pied de l'aube à son sommet tout en ayant latéralement une étendue suffisante pour former un écran couvrant le conduit amont (93) et le conduit aval (96) de la paroi d'intrados et pour isoler conjointement les conduits adjacents amont (93) et aval de la paroi d'intrados ;
- et **en ce que** la cavité supérieure (103) est distincte de la rampe aval (99) et est alimentée en air par le conduit aval (26).

2. Aube selon la revendication 1, dans laquelle chaque cavité latérale interne (101, 102) est pourvue de promoteurs de turbulences et/ou de déflecteurs pour y accroître les échanges thermiques, et dans laquelle le conduit amont (93) et le conduit aval (96) présentent des parois lisses pour limiter les pertes de charge.

3. Moyens de moulage configurés pour la fabrication d'une aube (91) selon la revendication 1 ou 2, comprenant des empreintes et un ensemble de noyaux destinés à la formation des conduits internes et rampes, et des cavités internes formant écran.

4. Turbine de turbomachine comprenant une aube (91) selon la revendication 1 ou 2.

5. Turbomachine comprenant une turbine selon la revendication précédente.

## Patentansprüche

1. Turbinenschaufel (91) einer Turbomaschine wie einer Propellerturbine oder eines Turbotriebwerks, wobei diese Schaufel (91) einen Fuß (P), ein von diesem Fuß (P) getragenes Blatt umfasst, wobei dieses Blatt eine Vorderkante und eine Hinterkante umfasst, die sich stromabwärts der Vorderkante befindet, wobei dieses Blatt eine Druckseite und eine Saugseite umfasst, die seitlich voneinander beabstandet sind und jeweils die Vorderkante mit der Hinterkante verbinden, wobei dieses Blatt umfasst:
- mindestens einen stromaufwärts liegenden Kanal (93), der Kühlluft im Bereich des Fußes (P) sammelt, um die Vorderkante durch Abführen dieser Luft durch Löcher, welche die Wand des Blattes durchqueren, im Bereich seiner Vorderkante zu kühlen;
- mindestens einen stromabwärts liegenden Kanal (96), der sich von dem stromaufwärts liegenden Kanal (93) unterscheidet und an den stromaufwärts liegenden Kanal (93) angrenzend ist, der Kühlluft im Bereich des Fußes (P) sammelt, um die Hinterkante durch Abführen dieser Luft durch Löcher (97), welche die Druckseitenwand stromaufwärts der Vorderkante durchqueren, zu kühlen;
- einen seitlichen inneren Hohlraum (102), der die Saugseitenwand entlangführt, um eine Wärmeabschirmung zu bilden, die seitlich eine ausreichende Ausdehnung aufweist, um gemeinsam den stromaufwärts liegenden Kanal (93) und den stromabwärts liegenden Kanal (96) der Saugseitenwand zu isolieren.
- Kühlschlitze (98), die regelmäßig beabstandet sind, und sich
in der Fortsetzung zueinander erstrecken und entlang seiner Hinterkante seine Druckseitenwand durchqueren, und eine stromabwärts liegende Rampe (99) zum Versorgen dieser Kühlschlitze (98) mit Kühlluft;
- einen oberen Hohlraum (103), der sich im Bereich des Scheitels (S) der Schaufel befindet, um
den Schlitz (104) der Hinterkante, der diesem Scheitel (S) am nächsten liegt, mit Luft zu versorgen;
- eine stromaufwärts liegende Rampe (92) zum Versorgen von Kühllöchern (22) der Vorderkante, und wobei dieser stromaufwärts liegende Kanal (93) zum kalibrierten Versorgen dieser stromaufwärts liegenden Rampe (92) konfiguriert ist;
**dadurch gekennzeichnet, dass**:
- sie einen weiteren seitlichen inneren Hohlraum (101) umfasst, der die Saugseitenwand
entlangführt, um eine Wärmeabschirmung zu bilden, die sich vom Fuß der Schaufel bis zu ihrem Scheitel erstreckt, und dabei seitlich eine ausreichende Ausdehnung aufweist, um eine Abschirmung zu bilden, die den stromaufwärts liegenden Kanal (93) und den stromabwärts liegenden Kanal (96) der Druckseitenwand abzudecken, und um gemeinsam den benachbarten stromaufwärts (93) und stromabwärts liegenden Kanal (96) der Druckseitenwand zu isolieren;
- und dadurch, dass sich der obere Hohlraum (103) von der stromabwärts liegenden Rampe (99) unterscheidet und vom stromabwärts liegenden Kanal (96) mit Luft versorgt wird.

2. Schaufel nach Anspruch 1, wobei jeder seitliche innere Hohlraum (101, 102) mit Turbulenzförderern und/oder Leitblechen versehen ist, um dort die Wärmeaustausche zu erhöhen, und wobei der stromaufwärts liegende Kanal (93) und der stromabwärts liegende Kanal (96) glatte Wände aufweisen, um die Druckverluste zu begrenzen.

3. Formmittel, die zur Herstellung einer Schaufel (91) nach Anspruch 1 oder 2 konfiguriert sind, umfassend Abdrücke und eine Reihe von Kernen, die zum Bilden der inneren Kanäle und Rampen und inneren Hohlräume, die eine Abschirmung bilden, bestimmt sind.

4. Turbine einer Turbomaschine, die eine Schaufel (91) nach Anspruch 1 oder 2 umfasst.

5. Turbomaschine, die eine Turbine nach dem vorstehenden Anspruch umfasst.

## Claims

1. Blade (91) of a turbo engine turbine such as a turboprop or a turbo engine, with this blade (91) comprising a root (P), a vane borne by this root (P), with this vane comprising a leading edge and a trailing edge located downstream of the leading edge, with this vane comprising a pressure-side wall and a suction-side wall spaced laterally from one another and each one connecting the leading edge to the trailing edge, with this vane comprising:
- at least one upstream duct (93) collecting cooling air at the root (P) in order to cool the leading edge by discharging this air by holes passing through the wall of the vane at its leading edge;
- at least one downstream duct (96) separate from the upstream duct (93) and adjacent to the upstream duct (93) collecting cooling air at the root (P) in order to cool the trailing edge by discharging this air through holes (97) passing through the pressure-side wall upstream of the trailing edge;
- an inner side cavity (102) running along the suction-side wall in order to form a heat shield that laterally has an extent that is sufficient to jointly insulate the upstream duct (93) and the downstream duct (96) from the suction-side wall;
- cooling slots (98) spaced evenly and extending in line with each other and passing through its pressure-side wall along its trailing edge and a downstream ramp (99) for the supply of cooling air of these cooling slots (98) ;
- an upper cavity (103) located at the tip (S) of the blade in order to supply the slot (104) of the trailing edge with air which is the closest to this tip (S), this upper cavity (63, 103) being separate from the downstream ramp (59, 99) and being supplied with air by the downstream duct (56, 96) ;
- an upstream ramp (92) for supplying cooling holes of the leading edge, and the upstream duct (93) with a calibrated supply of the upstream ramp (92);
**characterized in that** :
- it comprises another inner side cavity running along the pressure-side wall in order to form a heat shield extending from the root to the tip (S) and that laterally has an extent that is sufficient to form a shield covering the upstream duct (93) and the downstream duct (96) from the pressure-side wall and to jointly insulate the adjacent upstream duct (93) and downstream duct (96) from the pressure side wall ;
- and **in that** the upper cavity (103) is separate from the downstream ramp (99) and is supplied with air by the downstream duct (96).

2. Blade according to one of claims 1, in which each inner side cavity (101, 102) is provided with promoters of turbulence and/or deflectors in order to increase therein the heat exchanges, and in which the upstream duct (93) and the downstream duct (96) have smooth walls in order to limit load losses.

3. Means for moulding for the manufacture of a blade (91) according to one of claims 1 or 2, comprising imprints and a set of cores intended for the formation of inner ducts and ramps, and possibly inner cavities forming a shield.

4. Turbine de turbomachine comprising a blade (91) according to claim 1 or 2.

5. Turbomachine comprising a turbine as claimed in the preceding claim.
